# EUROPEAN PATENT APPLICATION

(11) **EP 4 723 306 A1**
(43) Date of publication of application: **08.04.2026**
(21) Application number: 23940597.0
(22) Date of filing: 05.06.2023
(51) Int. Cl.: H01M 10/6556, H01M 10/613, H01M 10/617, H01M 10/625, H01M 10/6568

(54) **BATTERY TEMPERATURE ADJUSTMENT SYSTEM**

(71) Applicant: TBK Co., Ltd., Machida-shi, Tokyo 194-0045 (JP)
(72) Inventor: TERADA, Yoshiyuki, Machida-shi Tokyo 194-0045 (JP); SUGAWARA, Masayuki, Machida-shi Tokyo 194-0045 (JP); YOSHITANI, Hirotada, Machida-shi Tokyo 194-0045 (JP)
(74) Representative: Fink Numrich Patentanwälte PartmbB
(86) International application number: PCT/JP2023/020866
(87) International publication number: WO 2024/252490

(57) **Abstract**

A battery temperature adjustment system for temperature adjustment of multiple batteries (BT), comprising: a heat transfer medium; a circulation flow path (12); a plurality of branch flow paths (13); a pumping device; heat exchange units (HX); a plurality of temperature detector units (T); a plurality of control valves (SV); a control unit (TCU).

## Description

### TECHNICAL FIELD

This invention relates to a battery temperature adjustment system.

### TECHNICAL BACKGROUND

The growth of the electric vehicle market necessitates improvements in battery performance. Electric vehicles incorporate numerous battery modules to supply power to various electronic components such as drive motors, electric actuators, and sensors. Battery overheating impacts not only battery lifespan and operational time but also safety. Furthermore, in cold climates, internal resistance increases, leading to reduced battery performance and, in some cases, battery damage. Therefore, it is necessary to manage the batteries to maintain them at an appropriate temperature. Patent Documents 1 and 2 disclose an invention for such a temperature management device. Multiple cooling targets are arranged in parallel within a flow path. Through an adjustment of the pressure difference in the flow path so that the heat transfer medium (refrigerant, coolant, etc.) passes, the flow rate of the heat transfer medium flowing through the cooling targets is equalized. Furthermore, Patent Document 3 discloses a cooling system that uses variable valves to control the distribution of flow rate and achieve uniform cooling.

### PRIOR ART DOCUMENTS

### PATENT DOCUMENTS

Patent Document 1: Registered Patent Publication No. 7138595
Patent Document 2: Registered Patent Publication No. 6775705
Patent Document 3: Registered Patent Publication No. 5974492

### SUMMARY OF THE INVENTION

### PROBLEM TO BE SOLVED BY THE INVENTION

However, the batteries installed in electric vehicles supply power to various operations and actuator control devices. As each battery responds to demands from its respective power supply target and is used under different operating conditions, each battery experiences different thermal states. Consequently, it is necessary to individually manage and adjust the temperature for each battery.

The present invention has been made in view of such problems, and aims to provide a battery temperature control system capable of managing the temperature individually for each battery in a plurality of batteries and adjusting each battery to an appropriate temperature range.

### SOLUTIONS FOR SOLVING THE PROBLEM

To solve the above problem, the present invention relates to a system which performs temperature adjustment on multiple batteries, comprising: a heat transfer medium, which is a fluid that delivers heat; a circulation flow path, which is a passageway wherein the heat transfer medium circulates; a plurality of branch flow paths configured to branch off in parallel from the circulation flow path and reconverge into the circulation flow path; a pumping device configured to pump the heat transfer medium within the circulation flow path; a plurality of heat exchange units, each installed for each branch flow path, and wherein each battery performs heat exchange with the heat transfer medium; a plurality of temperature detector units, each installed for each branch flow path, configured to detect a temperature of each battery; a plurality of control valves installed for each branch flow path, configured to respectively control a flow rate of the heat transfer medium; and a control unit configured to control at least the plurality of control valves and the pumping device based on a temperature detected by the temperature detector units, using a heat supply device connected to the circulation flow path for heating or cooling the heat transfer medium.

The above battery temperature adjustment system may comprise: wherein the heat supply device comprising: a cooling unit for cooling the heat transfer medium; a heating unit for heating the heat transfer medium, and further comprising: a cooling flow path branching from the circulation flow path and passing through the cooling unit; a heating flow path passing through the heating unit; and a switching control valve in the circulation flow path configured to be able to control switching between a flow path from the circulation flow path through the cooling flow path or a flow path from the circulation flow path through the heating flow path, wherein the control unit is configured to control the switching of the switching control valve.

The above battery temperature adjustment system may further comprise, wherein the control unit comprising: a comparison unit configured to compare a magnitude relationship between a predetermined threshold and a temperature detected by the temperature detector units; a command unit configured to transmit a control signal to perform a control based on a comparison result from the comparison unit.

The above battery temperature adjustment system, wherein the multiple batteries may be vehicle batteries.

### EFFECT OF THE INVENTION

With the above configuration of the battery temperature adjustment system, the system comprises, a plurality of branch flow paths branching from a circulation flow path, each equipped with a heat exchange unit, a temperature detector unit, a control valve; a pumping device that heats or cools a heat transfer medium, using a heat supply device and transmitting by pressure the heat transfer medium; and a control unit that performs control. Based on a temperature of each battery detected by the temperature detector unit, the pumping device is controlled to pump the heated or cooled heat transfer medium using the heat supply device. The control unit then controls the control valve to adjust a flow rate, enabling individual temperature management for each battery. This allows temperature adjustment even when the cooling or heating requirements of each battery change due to different operating conditions. Furthermore, the control unit may also control the heat exchange unit as a target if temperature adjustment control via the heat exchange unit is feasible.

With the above configuration of the battery temperature adjustment system, it is preferable for the heat supply device to comprise a cooling unit for cooling the heat transfer medium and a heating unit for heating the heat transfer medium, both independently, and to be configured with a switching control valve capable of switching between a cooling flow path passing through the cooling unit and a heating flow path passing through the heating unit. By configuring the control unit to control the switching of the flow path of the switching control valve, it is possible to cool or heat batteries. This enables temperature adjustment of batteries.

With the above configuration of the battery temperature adjustment system, the control unit comprises a comparison unit and a command unit. This enables the comparison of a predetermined threshold value with the temperature detected by the temperature detection unit. Based on the comparison result, the control unit can change the control of components such as the pumping device, the control valve, and the switching control valve. The predetermined threshold is a temperature value set for the optimal temperature range for battery use. It is preferable to pre-set thresholds for temperatures above and below this range. Specifically, it is preferable to set a threshold for initiating temperature adjustment via cooling and a threshold for initiating temperature adjustment via heating.

With the above configuration of the battery temperature adjustment system, it is preferable for batteries to be a vehicle batteries. This enables the battery to be maintained within an optimal temperature range even when used under varying conditions, such as powering the vehicle's drive motor, electronic equipment, or electric actuators. Consequently, the operational time per charge of the battery can be extended.

### BRIEF DESCRIPTION OF THE DRAWINGS

FIG. 1 is a schematic diagram showing an example of the battery temperature adjustment system according to the present invention applied to an electric vehicle;
FIG. 2 is a schematic diagram showing the battery temperature adjustment system according to the first embodiment;
FIG. 3 is a block diagram showing the control mechanism of the battery temperature adjustment system according to the first embodiment.;
FIG. 4 is a flowchart showing the control of the battery temperature adjustment system according to the first embodiment;
FIG. 5 is a schematic diagram showing the battery temperature adjustment system according to the second embodiment;
FIG. 6 is a block diagram showing the control mechanism of the battery temperature adjustment system according to the second embodiment; and
Fig. 7 is a flowchart showing the control of the battery temperature adjustment system according to the second embodiment.

### DETAILED DESCRIPTION OF THE INVENTION

The embodiments of the present invention will now be described with reference to the drawings. The embodiments described below are merely examples of the present invention. Improvements or modifications may be made without departing from the scope of the present invention.

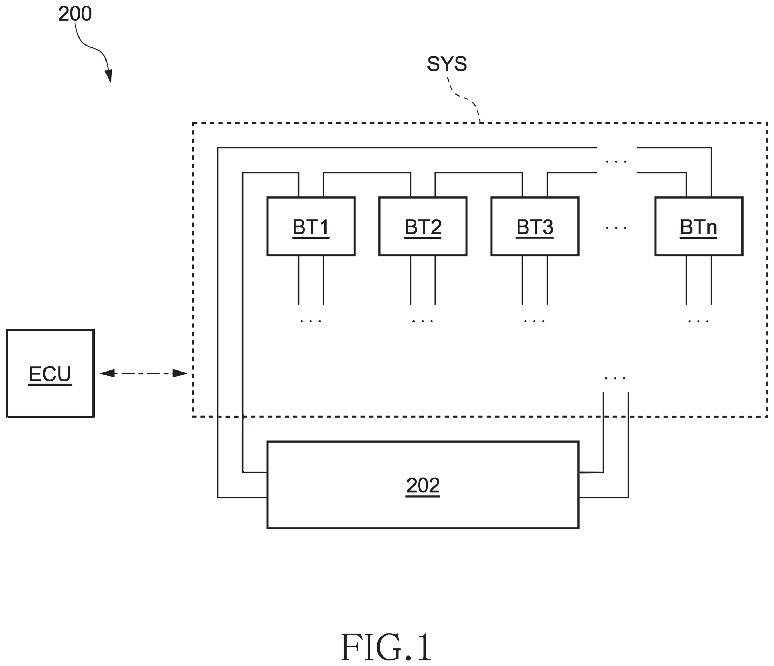

First, an electric vehicle 200 equipped with the battery temperature adjustment system SYS according to this embodiment is described based on the schematic diagram in FIG. 1. The battery temperature adjustment system SYS performs temperature adjustment by individually cooling or heating a plurality of batteries according to the temperatures detected by the temperature detector units. FIG. 1 shows the main components of an electric vehicle 200 related to the battery temperature adjustment system SYS; it does not show all components of the electric vehicle 200.

The electric vehicle 200 comprises a plurality batteries BT1 to BTn, a battery temperature adjustment system SYS according to this embodiment for managing the temperature of the batteries BT1 to BTn, a heat supply device 202, and an electronic control unit ECU. The electric vehicle 200 drives the drive motor using electricity stored in the plurality of batteries BT1 to BTn (hereinafter collectively referred to as battery BT). It also controls the drive motor's driving force by controlling the voltage. The electricity stored in battery BT is also used to drive other electric actuators and electronic devices. Batteries BT1 to BTn are temperature-managed using the battery temperature adjustment system SYS according to this embodiment.

A plurality of batteries BT1 to BTn each have an optimal temperature range for operation depending on their type, and stable operation is guaranteed within that temperature range. It is preferable to establish a threshold within the control unit TCU described later for determining the control for heating or cooling based on the upper and lower limits of this temperature range for batteries BT1 to BTn. If the battery overheats beyond the upper limit of this temperature range, it can lead to reduced battery life and degradation. Furthermore, at low temperatures below the lower limit of the temperature range, the battery's internal resistance increases, resulting in reduced performance. For example, during rapid charging in cold regions, a battery can recover to 30-40% of full charge in 30 minutes when the ambient temperature is 30-50°C. However, at temperatures below 10°C, the charging capacity decreases, and it drops significantly below 0°C, recovering less than 10% after the same 30 minutes of charging. So that, charging capacity decreases as the ambient temperature drops. Furthermore, batteries BT1 to BTn may each be a different type of battery. In this case, it is preferable to set thresholds based on the temperature range appropriate for each type.

The electronic control unit ECU communicates with various electronic devices installed in the electric vehicle 200. Through the collaboration of hardware and software, it controls the engine, transmission, brakes, and other electronic devices. This electronic control unit ECU may also be an in-vehicle ECU (Electric Control Unit). The electronic control unit ECU communicates with the control unit TCU, described later, via wired or wireless means.

The heat supply device 202 is a device capable of temperature adjustment inside the electric vehicle 200. For example, it includes an electric fan, a radiator, and semiconductor ceramic heaters such as PTC (Positive Temperature Coefficient) heaters. The electric fan rotates due to airflow generated during vehicle running, and cools the target object using the airflow created by its rotation. The radiator is a device that circulates cooled fluid internally, performing heat exchange with the surrounding air or fluid to cool the target object. A PTC heater is a heating device made by blending highly conductive particles, such as semiconductor particles and carbon particles, so that electrical conductivity changes with temperature. Such a heat supply device 202 capable of heating or cooling the heat transfer medium, 10, described later, is used in the battery temperature adjustment system SYS of this embodiment as a device for heating or cooling the heat transfer medium 10.

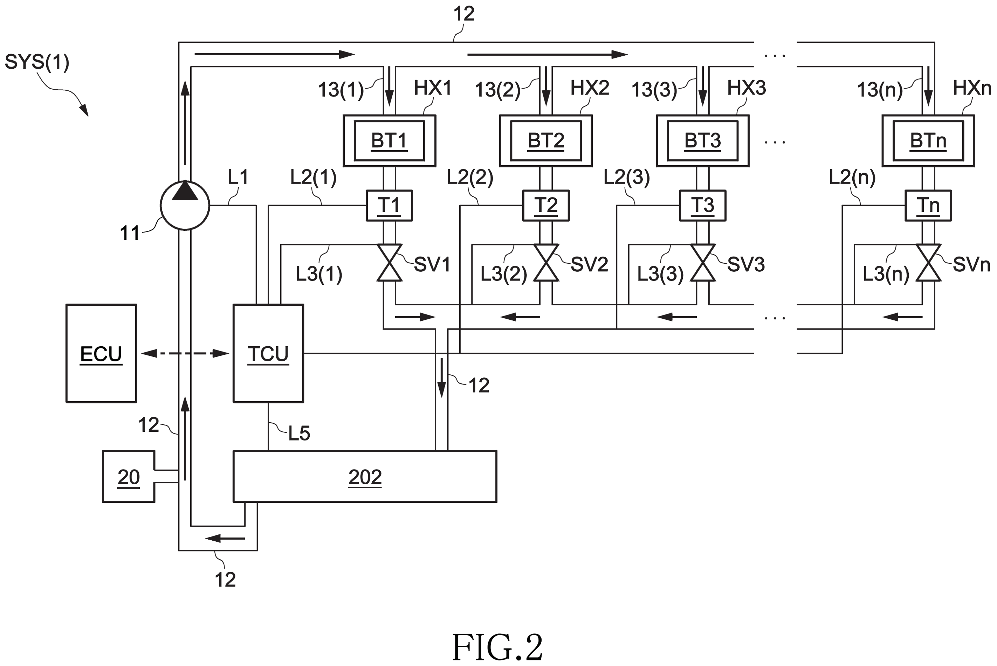

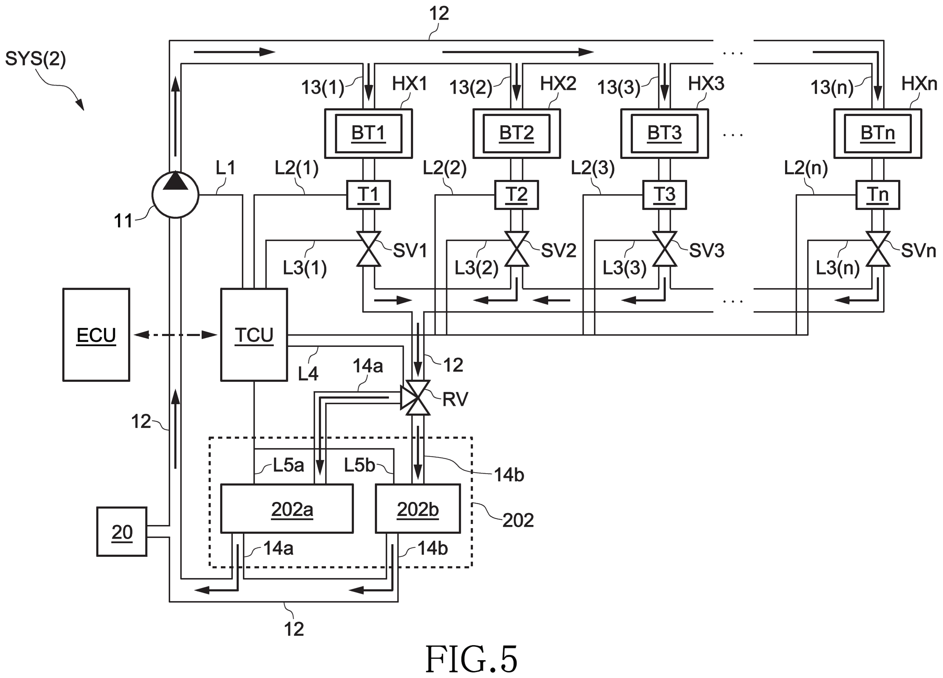

Next, the configuration diagrams in FIGS. 2 and 5 will be used to describe the components of the battery temperature adjustment systems SYS (1) and SYS (2) according to the first and second embodiments, respectively, other than those already described above. The embodiments incorporating these components will be described later.

The heat transfer medium 10 is a fluid that is heated or cooled by the heat supply device 202 and transfers its heat by moving itself. Heat transfer medium 10 circulates through the circulation flow path 12 and branch flow path 13 described later, and performs heat exchange with batteries BT1 to BTn at heat exchange units HX1 to HXn. When heating the battery, the heated heat transfer medium 10 transfers heat to the battery BT, thereby heating the target battery. When cooling a battery, the cooled heat transfer medium 10 absorbs heat from the battery BT, thereby cooling the target battery.

For such a heat transfer medium, LLC (Long Life Coolant) can be used for cooling purposes. Furthermore, when used for both cooling and heating purposes, it is desirable that the fluid medium be suitable for either application. It is also desirable that the fluid medium does not corrode the materials forming the flow path.

The pumping device 11 is installed in the circulation flow path 12 and forces the heat transfer medium 10, to flow in a specific direction within the circulation flow path, forming a flow. The pumping device 11 can control the pressure during feeding and the feeding speed of the heat transfer medium 10. This control is performed by the control unit TCU. The position of the pumping device 11 in FIG. 2 is one example and can be changed as appropriate. An electric water pump can be used as the pumping device 11.

The circulation flow path 12 is a circulation flow path through which the heat transfer medium 10 flows. The plurality of branch flow paths 13 (1) to 13 (n) branch off in parallel from circulation flow path 12, and the plurality of branch flow paths 13 (1) to 13 (n) converge again and connect to the circulation flow path 12. Furthermore, the heat supply device 202 is installed midway along the circulation flow path 12, enabling the heat supply device 202 to cool or heat the heat transfer medium 10. When the heat supply device 202 includes both a cooling unit 202a and a heating unit 202b, it is preferable to have a switching control valve RV, described later, upstream of the heat supply device 202.

The branch flow paths 13 (1) to 13 (n) (hereinafter collectively referred to as branch flow path 13) branch off in parallel from the circulation flow path 12 and reconverge to connect back to the circulation flow path 12. Each of the plurality of branch flow paths 13 (1) to 13 (n) is equipped with at least one heat exchange unit HX1 to HXn, one temperature detector unit T1 to Tn, and one control valve SV1 to SVn. For example, branch flow path 13 (1) is equipped with heat exchange unit HX1, temperature detector unit T1, and control valve SV1. This allows forming flow paths to individually detect the temperature of batteries BT1 to BTn and perform individual heat exchange.

The heat exchange units HX1 to HXn (hereinafter collectively referred to as heat exchange unit HX) are each provided at least once on each of the branch flow paths 13 (1) to 13 (n). The heat exchange unit HX and the battery BT are connected and installed such that they can exchange heat with each other. Furthermore, the heat exchange unit HX is installed such that heat exchange is possible between it and the heat transfer medium10 as the heat transfer medium 10 passes through the branch flow paths 13 (1) to 13 (n). Consequently, when the heat transfer medium10 passes through the branch flow paths 13 (1) to 13 (n), heat exchange occurs between the heat transfer medium 10 and the heat exchange unit HX at the heat exchange units HX1 to HXn, and heat exchange occurs between the heat exchange unit HX and the battery BT. The heat exchange unit HX is formed from a material with high thermal conductivity.

The temperature detector units T1 to Tn (hereinafter collectively referred to as temperature detector unit T) are installed at least one in each of the branch flow paths 13 (1) to 13 (n). They detect the temperature of battery BT1 to BTn based on the temperature of the heat transfer medium 10, after it passes through heat exchange units HX1 to HXn. The temperature detector unit T may directly detect the temperature of the batteries BT1 to BTn. Alternatively, it may detect both the temperature of the batteries BT1 to BTn and the temperature of the heat transfer medium 10, after it has passed through the heat exchange units HX1 to HXn, so that the temperature difference can be detected. By detecting both, the temperature of the battery and the temperature after heat exchange with the battery can be detected, enabling more accurate temperature management. The temperatures of temperature detector units T1 to Tn are monitored by the control unit TCU while comparing them against thresholds described later. Temperature sensors such as thermistors can be used as these temperature detector units T1 to Tn.

The control valves SV1 to SVn (hereinafter also referred to as control valve SV) are installed at least one each in the plurality of branch flow paths 13 (1) to 13 (n). The control valve SV can perform adjustment of the flow rate of the heat transfer medium 10, from upstream to downstream and open/close the flow path by moving its valve body. The valve body of control valve SV is controlled by control unit TCU. A solenoid valve (i.e., an electromagnetic valve) can be used as such a control valve SV.

The control unit TCU controls at least the pumping device 11 and the control valves SV1 to SVn based on temperature information received from the temperature detector units T1 to Tn. When a switching control valve RV is equipped, it controls the pumping device 11, the control valves SV1 to SVn, and the switching control valve RV. It is preferable to configure the control unit TCU so that it centrally controls the electronic devices included in the battery temperature adjustment system SYS. Furthermore, the control unit TCU may also control the heat supply device 202. Additionally, if the heat exchange units HX1 to HXn are controllable, they may also be controlled by the control unit TCU.

The control unit TCU is configured to include a comparison unit 30 and a command unit 31.

The comparison unit 30 compares the temperature measured by the temperature detector units T1 to Tn with either the cooling threshold temperature Ta or the heating threshold temperature Tb. The cooling threshold temperature Ta is a value determined based on the upper limit of the optimal temperature range for driving battery BT, and the heating threshold temperature Tb is a temperature determined based on the lower limit of the optimal temperature range for driving battery BT. The comparison unit 30 compares the temperature from the temperature detector unit T with the cooling threshold temperature Ta and the heating threshold temperature Tb to determine which is greater. It determines that cooling operation for battery BT should be performed when the temperature exceeds the cooling threshold temperature Ta, and determines that heating operation for battery BT should be performed when the temperature exceeds the heating threshold temperature Tb. When several types of batteries are provided, it is preferable to set threshold temperatures Ta and Tb for the appropriate temperature range for each battery type.

The control unit TCU includes a command unit 31 that transmits control signals to control each mechanism based on the determination made by the comparison unit 30.

The command unit 31 transmits control signals to each control target based on the determination of the comparison unit 30. In FIGS. 2 and 5, the signal lines transmitting the control signals are shown as L1, L2 (1) to L2 (n), L3 (1) to L3 (n), L4, L5, L5a, and L5b. Centralized control of the electronic devices by the control unit TCU enables efficient temperature adjustment. The control method for temperature adjustment by the control unit TCU will be described later along with the details of each embodiment.

It is also preferable that the control unit TCU be configured so that it performs a two-way wired or wireless communication with the electronic control unit ECU of the electric vehicle 200. By enabling communication between the control unit TCU and the electronic control unit ECU, the ECU can receive information such as battery temperature and utilize it for other control functions. Conversely, the control unit TCU can receive information from the electronic control unit ECU and use it for its own control operations. For communication between the control unit TCU and the electronic control unit ECU, wired CAN (Controller Area Network) communication, for example, can be used.

The switching control valve RV is a control valve capable of switching between a plurality of flow paths via a valve body, with the switching controlled by the control unit TCU. When the heat supply device 202 installed in the circulation flow path 12 independently possesses a cooling unit 202a and a heating unit 202b, it is preferable to configure it with a cooling flow path 14a branching from the circulation flow path and passing through the cooling unit 202a, and a heating flow path 14b branching from the circulation flow path and passing through the heating unit 202b. The switching control valve RV is configured to switch the flow path to either the cooling flow path or the heating flow path. A rotary valve can be used as the switching control valve RV.

Next, the details of each embodiment will be described. The battery temperature adjustment system SYS according to this embodiment uses the heat supply device 202 provided in the aforementioned electric vehicle 200 to perform heating and cooling of the heat transfer medium 10. The heat supply device 202 may independently have a cooling unit 202a for performing cooling and a heating unit 202b for performing heating. It may also be a device capable of performing both heating and cooling. Control of the heat supply device 202 is preferably performed by the control unit TCU.

The following describes each embodiment having the above-mentioned components. Components common to these embodiments are omitted from description where they overlap with the above.

### (FIRST EMBODIMENT)

The battery temperature adjustment system SYS (1) according to the first embodiment is described using the configuration diagram in FIG. 2. The battery temperature adjustment system SYS (1) according to the first embodiment includes a heat transfer medium 10 (not shown in the FIG.), a pumping device 11, a circulation flow path 12, and a plurality of branch flow paths 13 (1) to 13(n), a plurality of heat exchange units HX1 to HXn, a plurality of temperature detector units T1 to Tn, a plurality of control valves SV1 to SVn, and a control unit TCU. The control unit TCU includes a comparison unit 30 and a command unit 31, and performs adjustment of the temperatures of batteries BT1 to BTn using a heat supply device 202.

In this embodiment, the heat transfer medium 10 branches from the circulation flow path 12 into a plurality of branch flow paths 13 (1) to 13 (n), and then rejoins the circulation flow path 12 to circulate. The heat supply device 202 is installed on the circulation flow path 12, and the heat transfer medium 10 is cooled or heated. The comparison unit 30 has a cooling threshold temperature Ta, at which control for cooling begins relative to the appropriate temperature range for batteries BT1 to BTn, and a heating threshold temperature Tb, at which control for heating begins. Furthermore, a storage unit 20 is installed in the circulation flow path 12 to store and replenish the heat transfer medium 10. The storage unit 20 is a tank or similar item.

In the battery temperature adjustment system SYS (1) according to the first embodiment, the heat transfer medium 10 is transmitted by pressure through the circulation flow path 12 from the heat supply device 202 by the pumping device 11. It circulates in the direction illustrated by the arrows in FIG. 2, specifically from the circulation flow path 12, through the branch flow path 13, and back to the circulation flow path 12.

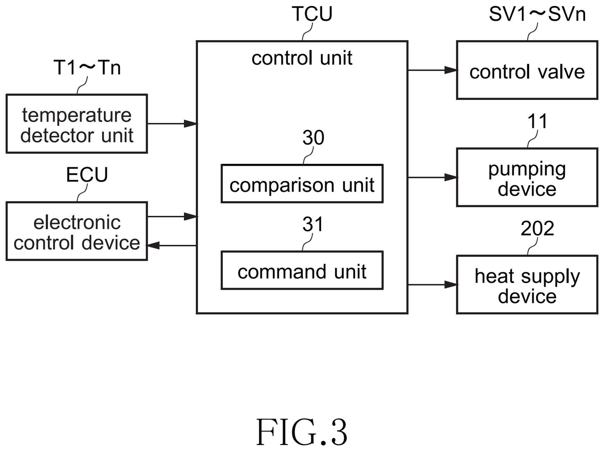

A heat exchange unit HX, a temperature detector unit T, and a control valve SV are each installed in each of the branch flow paths 13 (1) to 13 (n). The system is configured so that the heat transfer medium 10 flowing through the branch flow path 13 performs heat exchange with the heat exchange unit HX, and the heat exchange unit HX performs heat exchange with the battery BT. The temperature detector unit T measures the temperature of the heat transfer medium 10 after heat exchange at the heat exchange unit HX as the temperature of the battery BT. FIG. 3 is a block diagram showing the control mechanism by the control unit TCU of the battery temperature adjustment system SYS (1) according to Embodiment 1. In FIG. 3, the control unit TCU controls the pumping device 11, the control valves SV1 to SVn, and the heat supply device 202 according to the temperatures detected by the temperature detector units T1 to Tn. Furthermore, the control unit TCU communicates with the electronic control unit ECU, exchanging information with each other. During control, it transmits control signals using the signal lines L1, L2 (1) to L2 (n), L3 (1) to L3 (n), and L5 shown in FIG. 2. Signal line L1 transmits control signals to the pumping device 11, signal lines L2 (1) to L2 (n) transmit control signals to the temperature detector units T1 to Tn, signal lines L3 (1) to L3 (n) transmit control signals to the control valves SV1 to SVn, and signal line L5 transmits control signals to the heat supply device 202.

The following describes an example of a battery temperature adjustment method performed by the control unit TCU in the battery temperature adjustment system SYS (1) according to the first embodiment described above.

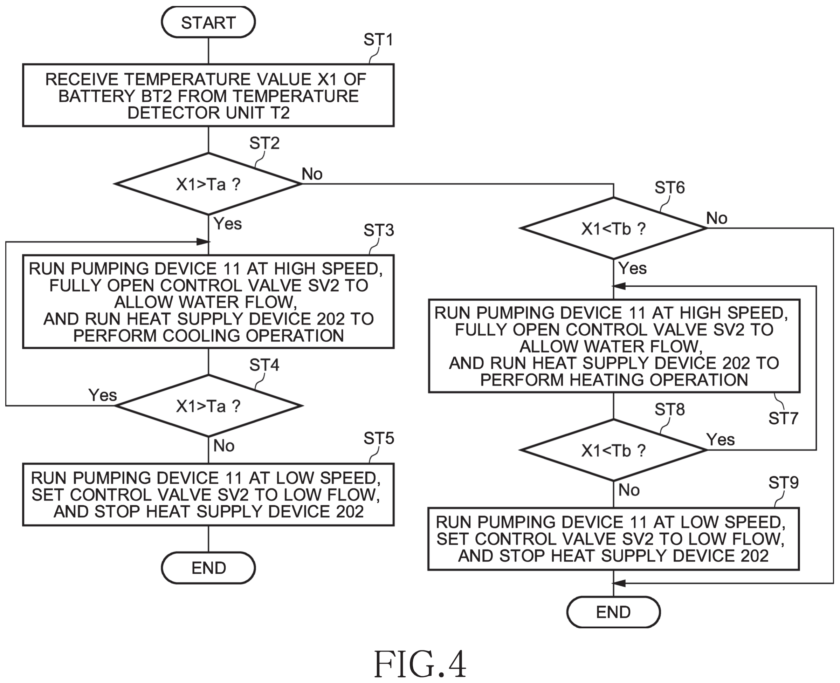

The method for adjusting the battery temperature is explained using the flowchart in FIG. 4. FIG. 4 is a flowchart showing the flow when performing temperature adjustment on battery BT2 in the first embodiment. The battery temperature adjustment system SYS (1) performs the control so that each battery BT1 to BTn receives the control shown in FIG. 4. However, the explanation here uses battery BT2. During normal operation, the pumping device 11 operates at low speed or is stopped by control signals from the control unit TCU, and the control valves SV1 to SVn each allow water flow at a low volume.
Heat transfer medium 10 circulates from the circulation flow path 12, passes through the heat supply device 202, flows through branch flow paths 13 (1) to 13 (n), and returns to the circulation flow path 12. At this time, the heat supply device 202 is not in operation. Furthermore, the pumping device 11 can be stopped depending on the temperature state of battery BT, thereby saving electrical energy.

The control unit TCU compares, in the comparison unit 30, whether the detected temperatures received via signal lines L2 (1) to L2 (n) from the temperature detector units T1 to Tn fall within a temperature range greater than the heating threshold temperature Tb and less than the cooling threshold temperature Ta. This comparison is performed according to the flow shown in FIG. 4. The command unit 31 then controls the respective mechanisms via signal lines L1, signal lines L3 (1) to L3 (n), etc., to control each mechanism.

Cooling operation is explained using FIG. 4. The control unit TCU receives information on the temperature X1 of battery BT2 from the temperature detector unit T2 (step ST1). It compares this with the cooling threshold temperature Ta (step ST2). If X1 > Ta is determined, the system operates the pumping device 11 at high speed, controls the control valve SV2 to fully open, runs the heat supply device 202, and initiates the cooling operation (Step ST3). Then, the comparison unit 30 compares the temperature X1 of battery BT2 with Ta (Step ST4). Steps ST3 and ST4 are repeated. Eventually, when temperature X1 falls below Ta, such that Tb < X1 < Ta, the pumping device 11 is operated at low speed, the flow rate of control valve SV2 is controlled so that it is a low flow rate, and the heat supply device 202 is stopped (Step ST5).

Next, the heating operation is described using FIG. 4. Upon receiving temperature X1 information from temperature detector unit T2 (Step ST1), the comparison unit 30 compares it with the heating threshold temperature Tb (Step ST6). If X1 < Tb is determined, the pumping device 11 is operated at high speed, the control valve SV2 is controlled to fully open, and the heat supply device 202 is run to start the heating operation (Step ST7). Then, the comparison unit 30 compares the temperature X1 of battery BT2 with Tb (Step ST8). Steps ST7 and ST8 are repeated. Eventually, when temperature X1 exceeds Tb and Tb < X1 < Ta, the pumping device 11 is operated at low speed, so that the flow rate of control valve SV2 is controlled to a low flow rate, and the heat supply device 202 is stopped (Step ST9).

Using the above method, individual temperature adjustment can be performed for each battery.

### (SECOND EMBODIMENT)

The battery temperature adjustment system SYS (2) according to the second embodiment is described using the configuration diagram of FIG. 5. The battery temperature adjustment system SYS (2) of the second embodiment comprises a heat transfer medium 10 (not shown in the FIG.), a pumping device 11, a circulation flow path 12, a plurality of branch flow paths 13 (1) to 13 (n), a plurality of heat exchange units HX1 to HXn, a plurality of temperature detector units T1 to Tn, a plurality of control valves SV1 to SVn, a switching control valve RV, and a control unit TCU. The control unit TCU includes a comparison unit 30 and a command unit 31, and performs temperature adjustment of batteries BT1 to BTn using a heat supply device 202. Furthermore, the heat supply device 202 includes a cooling unit 202a and a heating unit 202b, and comprises a cooling flow path 14a branching from the circulation flow path 12 and passing through the cooling unit 202a, and a heating flow path 14b branching from the circulation flow path 12 and passing through the heating unit 202b.

In this embodiment, the heat transfer medium 10 branches from the circulation flow path 12 into the plurality of branch flow paths 13 (1) to 13 (n), rejoins the circulation flow path 12, and circulates by passing through either the cooling flow path 14a or the heating flow path 14b before rejoining the circulation flow path 12 again. A heat supply device 202 is installed on the circulation flow path 12, and the heat transfer medium 10 is cooled or heated. A cooling threshold temperature Ta, at which control for cooling begins relative to the appropriate temperature range for batteries BT1 to BTn, and a heating threshold temperature Tb, at which control for heating begins, are set. The comparison unit 30 has a cooling threshold temperature Ta and a heating threshold temperature Tb. Furthermore, a storage unit 20 is installed in the circulation flow path 12 to store and replenish the heat transfer medium10. The storage unit 20 is a tank or similar item.

The second embodiment is configured so that the heat supply device 202 in the first embodiment has a cooling unit 202a and a heating unit 202b, and performs temperature adjustment by switching the flow path via a switching control valve RV between cooling and heating modes. Explanations overlapping with the first embodiment are omitted. Furthermore, components labeled with the same symbols as in the first embodiment have the same functions, and redundant descriptions are omitted.

The battery temperature adjustment system SYS (2) of the second embodiment, like the first embodiment, has a circulation flow path 12 and branch flow paths 13 (1) to 13n that branch off in parallel from the circulation flow path 12 and rejoin it. The heat transfer medium 10 is pumped into the circulation flow path 12 by the pumping device 11 and circulates. During cooling, it circulates through the cooling unit 202a, and during heating, it circulates through the heating unit 202b. During cooling, after leaving the heat supply device 202, it branches off from the circulation flow path 12 via the branch flow paths 13 (1) to 13 (n), rejoins the circulation flow path 12, and returns to the circulation flow path 12 via the cooling flow path 14a to circulate. During heating, after leaving the heat supply device 202, it branches off from the circulation flow path 12 via branch flow paths 13 (1) to 13 (n), rejoins the circulation flow path 12, and returns to the circulation flow path 12 via the heating flow path 14b to circulate.

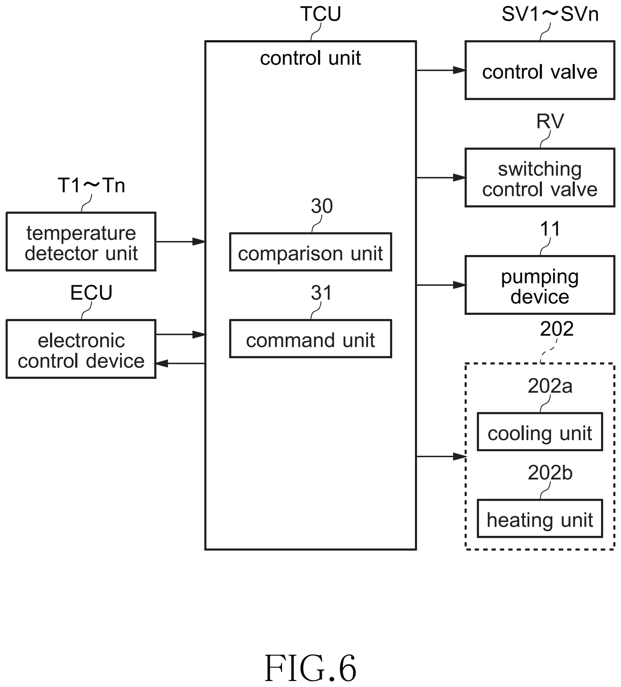

A heat exchange unit HX, a temperature detector unit T, and a control valve SV are each installed in each of the branch flow paths 13 (1) to 13 (n). Furthermore, a switching control valve RV is installed on the circulation flow path 12 where the branch flow paths 13 (1) to 13 (n) converge. The system is configured so that the heat transfer medium 10 flowing through branch flow paths 13, performs heat exchange with the heat exchange unit HX, and the heat exchange unit HX performs heat exchange with the battery BT. The temperature detector unit T measures the temperature of the heat transfer medium 10 after heat exchange in the heat exchange unit HX, as the temperature of the battery BT. FIG. 6 is a block diagram showing the control mechanism by the control unit TCU of the battery temperature adjustment system SYS (2) according to the second embodiment. In FIG. 6, the control unit TCU controls the pumping device 11, the control valves SV1 to SVn, the switching control valve RV, the cooling unit 202a, and the heating unit 202b according to the temperatures detected by the temperature detector units T1 to Tn. Furthermore, the control unit TCU communicates with the electronic control unit ECU, exchanging information with each other. During control, it transmits control signals using the signal lines L1, L2 (1) to L2 (n), L3 (1) to L3 (n), L4, L5a, and L5b shown in FIG. 5. Signal line L1 controls the pumping device 11, signal lines L2 (1) to L2 (n) control temperature detector units T1 to Tn, signal lines L3 (1) to L3 (n) control the control valves SV1 to SVn, signal line L4 is for the switching control valve RV, signal line L5a is for the cooling unit 202a, and signal line L5b is for the heating unit 202b.

An example of a battery temperature adjustment method by the control unit TCU in the battery temperature adjustment system SYS (2) according to the second embodiment described above is explained below.

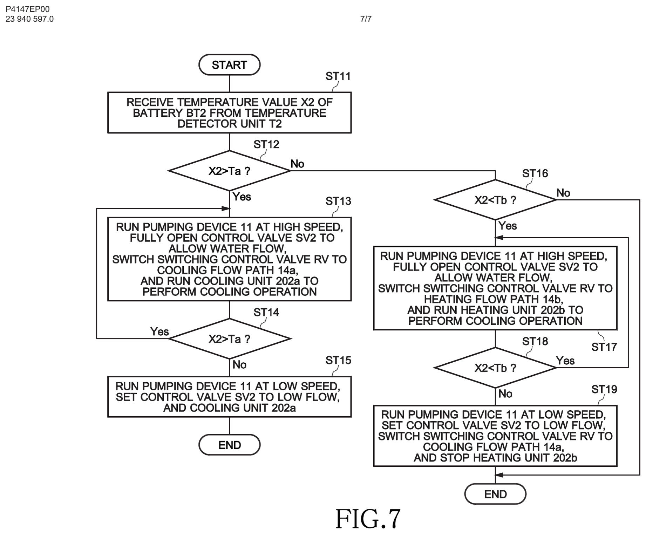

The method for performing battery temperature adjustment is explained using the flowchart in FIG. 7. FIG. 7 is a flowchart showing the flow when performing temperature adjustment for battery BT2 in the second embodiment. Although the battery temperature adjustment system SYS (2) controls the batteries BT1 to BTn so that the control shown in FIG. 7 is performed, the explanation here uses battery BT2. During normal operation, the pumping device 11 operates at low speed or is stopped based on control signals from the control unit TCU. The Control valves SV1 to SVn each allow water flow at low volume. The switching control valve RV directs water flow to the cooling unit 202a. A circulation flow path 12 branches off from the cooling unit 202a, forming a circulation flow path 12 that branches off from the cooling unit 202a and flows through branch flow paths 13 (1) to 13(n). At this time, the circulation flow path of the heat transfer medium 10, is formed. The heat supply device 202 is not operating. Furthermore, the pumping device 11 can be stopped depending on the temperature state of battery BT, thereby conserving electrical energy.

The control unit TCU compares, within the comparison unit 30, whether the detected temperature received via signal lines L2 (1) to L2 (n) from temperature detector units T1 to Tn falls within the temperature range greater than the heating threshold temperature Tb and less than the cooling threshold temperature Ta. This comparison is performed according to the flow shown in FIG. 7. Based on this comparison, the command unit 31 controls each mechanism via signal lines L1, L3 (1) to L3 (n), L4, L5a, L5b, etc., to control each device.

Cooling operation is explained using FIG. 7. The control unit TCU receives temperature X2 information from the temperature detector unit T2 (step ST11), compares it with the cooling threshold temperature Ta in the comparison unit 30 (step ST12), and and if it determines X2 > Ta, it operates the pumping device 11 at high speed, controls the control valve SV2 to fully open, switches the switching control valve RV to the cooling flow path 14a, runs the cooling unit 202a, and initiates the cooling operation (Step ST13). It then compares the battery BT2 temperature X2 with Ta (Step ST14). Steps ST13 and ST14 are repeated. Eventually, when temperature X2 falls below Ta, such that Tb < X2 < Ta, the pumping device 11 is operated at low speed, the flow rate of control valve SV2 is controlled so that it is a low flow rate, and cooling unit 202a is stopped (Step ST15).

Next, the heating operation is described using FIG. 7. When information on battery BT2's temperature X2 is received from temperature detector unit T2 (Step ST11), it is compared with heating threshold temperature Tb in comparison unit 30 (Step ST16). and if X2 < Tb is determined, the pumping device 11 is operated at high speed, the control valve SV2 is controlled to fully open, the switching control valve RV is switched to the heating flow path 14b, and the heating unit 202b is run to start the heating operation (Step ST17). Then, the temperature X2 of battery BT2 is compared with Tb (Step ST18). Steps ST17 and ST18 are repeated. Eventually, when temperature X2 exceeds Tb and Tb < X2 < Ta, the pumping device 11 is operated at low speed, the flow rate of control valve SV2 is controlled so that it is a low flow rate, the switching control valve RV is switched to the cooling flow path 14a, and the heating unit 202b is stopped. (Step ST19). Note that under normal conditions, whether the switching control valve RV is set to the cooling flow path 14a or the heating flow path 14b depends on the system design.

With the above method, individual temperature adjustment can be performed for each battery.

According to the battery temperature adjustment system configured as described above, even when cooling or heating demands vary for several batteries due to different operating conditions, it is possible to provide a battery temperature adjustment system capable of individually adjusting temperatures through cooling and heating.

The above describes an embodiment of the battery temperature adjustment system, but the present invention is not limited to these embodiments. The procedure for determining against thresholds may differ. Furthermore, while the inequality symbols in FIG. used "≤" and "≥" and the descriptions used "≥" and "≤", they may also be ">" and "<", or "greater than" and "less than". Multiple conditions may also be combined for use.

### EXPLANATION OF SYMBOLS

- SYS, SYS (1), SYS (2): Battery temperature adjustment system
- BT1 to BTn: Battery
- HX1 to HXn: Heat Exchange unit
- T1 to Tn: Temperature Detector unit
- SV1 to SVn: Control Valve
- RV: Switching Control Valve
- TCU: Control unit
- ECU: Electronic Control unit
- 202: Heat Supply device
- 202a: Cooling unit
- 202b: Heating unit
- 11: Pumping device
- 12: Circulation Flow path
- 13(1) to 13(n): Branch Flow path
- 14a: Cooling Flow path
- 14b: Heating Flow path
- 20: Storage unit
- 30: Comparison unit
- 31: Command unit
- L1 to L5, L5a, L5b: Signal Line

## Claims

1. A battery temperature adjustment system which performs temperature adjustment on multiple batteries, comprising:
a heat transfer medium, which is a fluid that delivers heat;
a circulation flow path, which is a passageway wherein the heat transfer medium circulates;
a plurality of branch flow paths configured to branch off in parallel from the circulation flow path and reconverge into the circulation flow path;
a pumping device configured to pump the heat transfer medium within the circulation flow path;
a plurality of heat exchange units, each installed for each branch flow path, and wherein each battery performs heat exchange with the heat transfer medium;
a plurality of temperature detector units, each installed for each branch flow path, configured to detect a temperature of each battery;
a plurality of control valves installed for each branch flow path, configured to respectively control a flow rate of the heat transfer medium; and
a control unit configured to control at least the plurality of control valves and the pumping device based on a temperature detected by the temperature detector units, using a heat supply device connected to the circulation flow path for heating or cooling the heat transfer medium.

2. The battery temperature adjustment system according to claim 1,
wherein the heat supply device comprising:
a cooling unit for cooling the heat transfer medium;
a heating unit for heating the heat transfer medium, and
further comprising:
a cooling flow path branching from the circulation flow path and passing through the cooling unit;
a heating flow path passing through the heating unit; and
a switching control valve in the circulation flow path configured to be able to control switching between a flow path from the circulation flow path through the cooling flow path or a flow path from the circulation flow path through the heating flow path,
wherein the control unit is configured to control the switching of the switching control valve.

3. The battery temperature adjustment system according to claim 1 or 2, wherein the control unit comprising:
a comparison unit configured to compare a magnitude relationship between a predetermined threshold and a temperature detected by the temperature detector units;
a command unit configured to transmit a control signal to perform a control based on a comparison result from the comparison unit.

4. The battery temperature adjustment system according to claim 3, wherein the multiple batteries are vehicle batteries.
